# EUROPEAN PATENT SPECIFICATION

(11) **EP 3 546 175 B1**
(45) Date of publication and mention of the grant of the patent: **21.10.2020**
(21) Application number: 19157142.1
(22) Date of filing: 14.02.2019
(51) Int. Cl.: B29C 45/17, B29C 45/72

(54) **INJECTION MOLDING MACHINE**
SPRITZGIESSMASCHINE
MACHINE DE MOULAGE À INJECTION

(30) Priority: 29.03.2018 JP 2018065702
(43) Date of publication of application: 02.10.2019
(73) Proprietor: Sumitomo Heavy Industries, Ltd., Tokyo 141-6025 (JP)
(72) Inventor: TOYOSHIMA, Kento, Chiba-shi, Chiba, 263-0001, (JP); MATSUTAKE, Yoshitaka, Chiba-shi, Chiba, 263-0001, (JP); EBATA, Koichiro, Chiba-shi, Chiba, 263-0001, (JP)
(74) Representative: Louis Pöhlau Lohrentz

(56) References cited:
- DE-A1- 4 413 130
- DE-A1- 19 831 483
- DE-C1- 4 235 060
- JP-A- H09 322 478
- JP-A- H11 207 799
- US-A1- 2007 134 365
- US-B2- 6 755 640

## Description

### BACKGROUND OF THE INVENTION

### Field of the Invention

Present invention relates to an injection molding machine.

### Description of Related Art

In an injection molding machine, a temperature of an internal space of a drive unit such as an injection unit may be increased by heat generated by a motor, a ball screw, or the like. In addition, a temperature of an internal space of a control unit may be increased by heat generated from electrical components . The temperature is remarkably increased according to a high cycle of injection molding.

In order to suppress the increase in temperature, a technology is disclosed in which cooling means such as a cooling fan or a cooling water jacket is provided for each unit having a heat source so as to cool an inside of each unit (Japanese Unexamined Patent Publication No. 2008-213400). DE 42 35 060 C1 and JP H11 207799 A each discloses an injection molding machine comprising a fan. DE 198 31 483 A1 discloses an injection molding machine in which a hydraulic medium serves as a tempering medium. US 6, 755, 640B2 discloses an injection molding machine comprising means for circulating water in a closed circuit.

### SUMMARY OF THE INVENTION

However, in the future, when high cycle further progresses and heat generated inside each unit increases, there is a possibility that cooling capability may be limited by the technology of Japanese Unexamined Patent Publication No. 2008-213400 or the like.

The present invention is made in consideration of the above-described problems, and an object thereof is to improve cooling capacity of an internal space of a unit provided in the injection molding machine.

According to an aspect of the present invention, there is provided an injection molding machine including: a drive unit; and a control unit, in which each of the drive unit and the control unit includes a heat source in an internal space which is covered with a cover of each of the drive unit and the control unit, and the internal space of any one unit of the drive unit and the control unit is cooled by a cooler. The cooler cools air in an internal space of a frame, and in the cooler heated air inside the frame is forcibly circulated by an internal fan motor.

According to the aspect of the present embodiment, it is possible to improve the cooling capacity of the internal space of the unit provided in the injection molding machine.

### BRIEF DESCRIPTION OF THE DRAWINGS

Fig. 1 is a side view showing a state when a mold opening of an injection molding machine according to a first embodiment is completed.
Fig. 2 is a side view showing a state when a mold of the injection molding machine according to the first embodiment is clamped.
Fig. 3 is a perspective view of a frame and an injection unit according to the first embodiment.
Fig. 4 is a top view of the injection unit according to the first embodiment from which an injection unit cover is removed.
Fig. 5 is a view explaining an internal structure of the frame according to the first embodiment.
Fig. 6 is a sectional view of an air duct hole according to the first embodiment.
Fig. 7 is a sectional view of an intake port according to the first embodiment.
Fig. 8 is a side view of the injection molding machine according to the first embodiment.
Fig. 9 is a side view of an injection molding machine according to a second embodiment.
Fig. 10 is a sectional view of an air duct hole according to the second embodiment.
Fig. 11 is a side view of an injection molding machine according to a third embodiment.
Fig. 12 is a side view of an injection molding machine according to a fourth embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### [First Embodiment]

### (Injection Molding Machine)

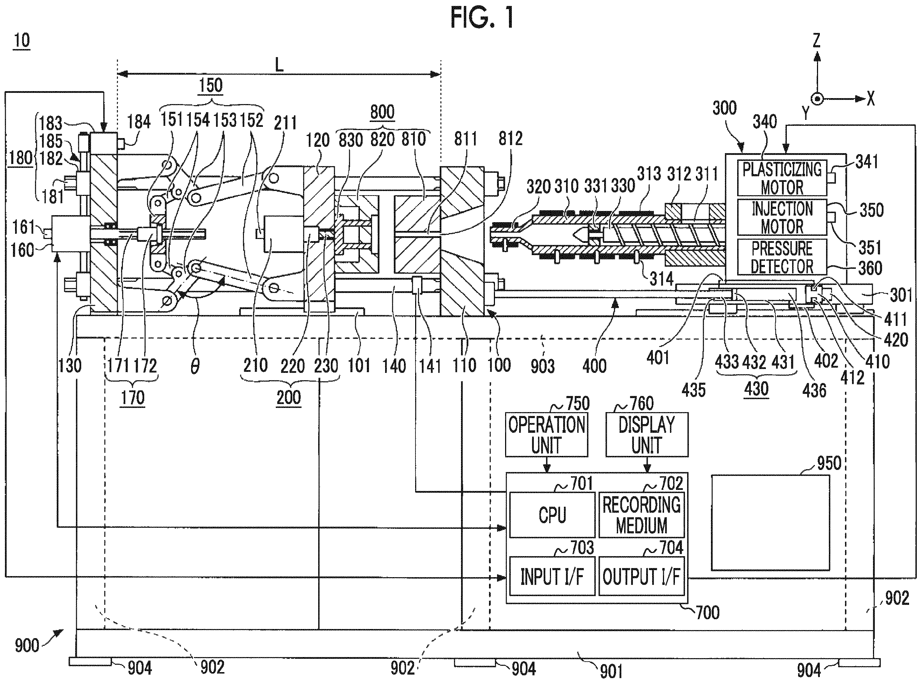

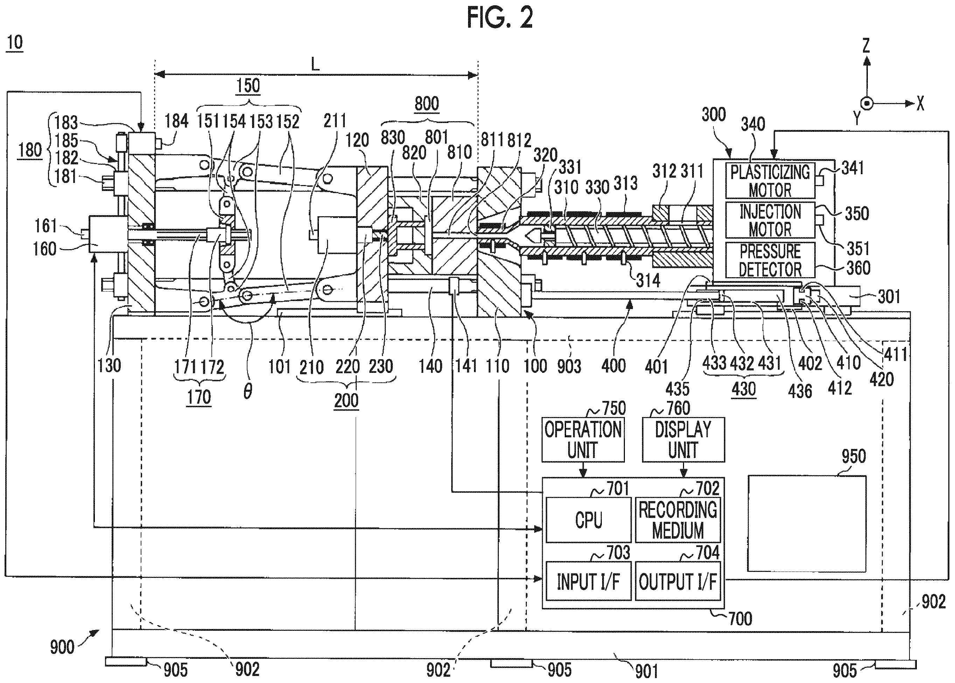

Fig. 1 is a view showing a state when a mold opening of an injection molding machine according an embodiment is completed. Fig. 2 is a view showing a state when a mold of the injection molding machine according to the embodiment is clamped. In Figs . 1 and 2, an X direction, a Y direction, and a Z direction are directions perpendicular to each other. The X direction and the Y direction indicate a horizontal direction, and the Z direction indicates a vertical direction. In a case where the a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motor 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The back flow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a pressure transmitted between the injection motor 350 and the screw 330. The pressure detector 360 is provided on a force transmission path between the injection motor 350 and the screw 330 and detects a pressure applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the control unit 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detectedusing a plasticizing motor encoder 341. The plasticizing motor encoder 341 detects the rotation of the plasticizing motor 340 and sends a signal indicating a detection result to the control unit 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the molding closing cycle may be performed at the final stage of the molding cycle . In addition, the filling process may start during the molding closing process . Moreover, the ejection process may be started during the mold opening process. In a case where an on/off valve which opens and closes the flow path of the nozzle 320 is provided, the mold opening process may be started during the plasticizing process. Accordingly, even when the molding opening process starts during the plasticizing process, if the on/off valve closes the flow path of the nozzle 320, the molding material does not leak from the nozzle 320.

The control unit 700 is connected to an operation unit 750 or the display unit 760. The operation unit 750 receives an input operation from a user and outputs a signal corresponding to the input operation to the control unit 700. The display unit 760 displays an operation screen corresponding to the input operation of the operation unit 750 under the control of the control unit 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### (Frame Structure, Cooler)

The frame 900 includes a plate-shaped frame base portion 901 which is installed horizontally, a plurality of frame pillar portions 902 which are erected on the frame base portion 901, and a plate-shaped frame ceiling portion 903 which is horizontally supported by the plurality of frame pillar portions 902. The frame base portion 901, and the plurality of frame pillar portions 902, and the frame ceiling portions 903 are integrated with each other by welding, and constitutes a frame body.

Various electrical components and the like are disposed in an internal space of the frame 900. The electrical components are units which are operated by electricity. For example, the electrical components include the control unit 700, the inverter 713, or the like.

The frame base portion 901 is installed on a floor or the like of a factory via plurality of leveling adjusters 904. Each leveling adjuster 904 adjusts a height of the frame base portion 901 with respect to the floor. Each leveling adjuster 904 includes a vibration damping rubber or the like which absorbs vibrations.

The plurality of frame pillar portions 902 vertically connect the frame base portion 901 and the frame ceiling portion 903 to each other with a gap. The plurality of frame pillar portions 902 are provided on an outer peripheral portion of each of the frame base portion 901 and the frame ceiling portion 903 with a gap. Each frame pillar portion 902 is formed in a rectangular cross section, but may be formed in an H-shaped cross section or the like.

The frame ceiling portion 903 supports the clamping unit 100, the injection unit 300, or the like. For example, a guide which guides the slide base 301 is fixed to the frame ceiling portion 903. In addition, the guide 101 for guiding the movable platen 120 and the stationary platen 110 are fixed to the frame ceiling portion 903.

A plurality of opening portions are formed on side surfaces (for example, X direction end surfaces and Y direction end surfaces) of the frame body. All sides of each opening portion are surrounded by the frame base portion 901, two frame pillar portions 902 which are adjacent to each other in the X direction or the Y direction, and the frame ceiling portion 903.

The frame 900 further includes a frame cover portion which covers the opening portions formed on side surfaces of the frame body. The frame cover portion is welded to the side surfaces of the frame body and thus, cannot be removed. However, the frame cover portion may be attached to the side surfaces by a bolt or the like, and thus, can be removed. In addition, the frame cover portion may include a plurality of cover panels according to respective opening portions, some of the cover panels can be removed, and some thereof cannot be removed.

Only a space below the injection unit 300 is a space which is closed by the frame cover portion.

In addition, even when the frame 900 itself does not have a function as a device, since the frame 900 includes the control unit 700, the frame 900 has a function of the control unit 700. Accordingly, in the present embodiment, it is assumed that an internal space of the frame 900 and an internal space of the control unit 700 are synonymous.

A cooler 950 is attached to the frame cover portion in the frame 900. The cooler 950 is attached such that a portion of the cooler 950 comes into contact with air in the internal space of the frame 900 and a portion of the cooler 950 comes into contact with air outside the frame 900.

In order to improve maintenance, preferably, the cooler 950 is attached to the cover panel which cannot be removed. The cover panel to which the cooler 950 is not attached can be removed. The frame 900 to which the cooler 950 is attached is an example of "any one of a drive unit and a control unit" in claims.

The cooler 950 cools air in the internal space of the frame 900. In the cooler 950, heated air inside the frame 900 is forcibly circulated by an internal fan motor. In addition, external air which is relatively cold is forcibly circulated by an external fan motor. Heat exchange is performed between the internal air and the external air by a heat exchanger included in the cooler 950, and thus, in the frame 900, the internal air is cooled to approximately the same temperature as that of the external air.

The cooling capacity of the cooler 950 is adjusted by an output based on a rotating speed or the like of the fan motor. In addition, a cooler 950 having an appropriate maximum cooling capacity (maximum output) is selected and attached according to a size of a space to be cooled.

In the present embodiment, the air in the internal space of the frame 900 is cooled by the heat exchange between the air in the internal space of the frame 900 and the external air of the frame 900. For example, an allowable temperature of the external air is 40° or less.

### (Cooling Configuration Example)

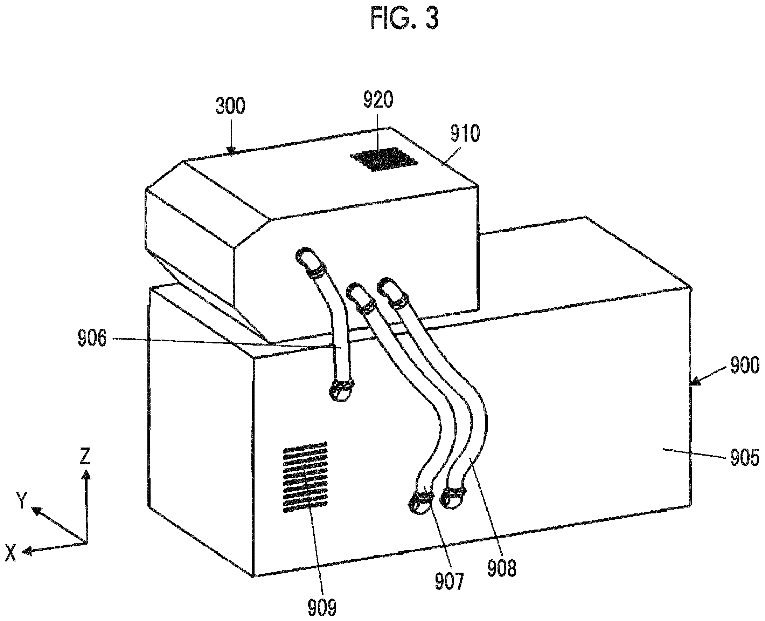

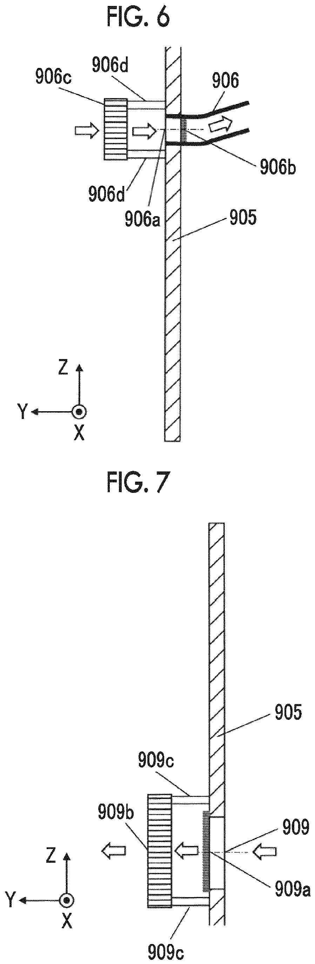

Next, an example of a configuration for performing the cooling will be described with reference to Fig. 3. Moreover, hereinafter, a fan, an air filter and a grease filter are described. However, in order to prevent complication of the drawings, illustrations thereof are omitted in Fig. 3. The fan, the air filter and the grease filter are separately shown in Figs. 6 and 7.

Fig. 3 is a perspective view of the frame 900 and the injection unit 300 when viewed from a side (Y direction negative side in Figs. 1 to 3) opposite to an operation side of the frame 900. A cover panel 905 of the plurality of cover panels constituting the frame cover portion is attached to the side opposite to the operation side of the frame 900. An injection unit cover 910 is attached to the injection unit 300. In addition, since the cooler 950 is attached to the frame cover portion on the operation side of the frame 900, the cooler 950 is not shown in Fig. 3.

The cover panel 905 includes an air duct hole for connecting an air duct 906, an intake port 909, and two holes for wire duct which connect wire ducts 907 and 908. The injection unit cover 910 includes an air duct hole for connecting the air duct 906, an exhaust port 920, and two holes for wire duct which connect the wire ducts 907 and 908.

One opening portion of the air duct 906 is connected to the air duct hole of the cover panel 905. In addition, the other opening portion of the air duct 906 is connected to the air duct hole of the injection unit cover 910. The frame 900 and the injection unit 300 communicate with each other through the air duct 906.

In addition, one opening portion of each of the wire ducts 907 and 908 is connected to each of two holes for wire duct provided in the injection unit cover 910. Moreover, the other opening portion of each of the wire ducts 907 and 908 is connected to each of two holes for wire duct provided in the cover panel 905. The frame 900 and the injection unit 300 communicate with each other through the wire ducts 907 and 908.

The external air is taken to the inside of the frame 900 through the intake port 909. Moreover, the intake port 909 is an example of a "take-in port" in claims.

In the internal space of the frame 900, a fan is provided around the intake port 909. The external air is taken into the internal space of the frame 900 through the intake port 909 by an airflow generated by blowing of the fan.

If dust is mixed with the external air taken from the intake port 909, it may cause a failure of the electrical components disposed in the internal space of the frame 900. Therefore, an air filter for removing the dust is provided in the intake port 909. The air filter collects fine particles in the air sucked into the internal space of the frame 900 from the outside. This keeps the internal space of the frame 900 clean.

Air cooled by the cooler 950 in the internal space of the frame 900 is supplied to the internal space of the injection unit 300 through the air duct 906.

In the internal space of the frame 900, a fan is provided around the air duct hole. The air cooled by the cooler 950 is supplied to the internal space of the injection unit 300 through the air duct 906 according to the airflow generated by blowing of the fan.

As described later, a mechanism such as a ball screw is disposed inside the injection unit 300. In the mechanism, in order to suppress friction or wear and perform lubrication effectively, a lubricant is used. Accordingly, an atmosphere in which fine particles of the lubricant are scattered occurs inside the injection unit 300. If the fine particles of the lubricant come into contact with an electric component such as the control unit disposed in the internal space of the frame 900, a failure may occur due to short circuit or the like of an electric circuit.

Therefore, a grease filter is provided in an air supply path from the frame 900 to the injection unit 300 such that fine particles of the lubricant do not enter the inside of the frame 900. For example, a grease filter is provided at the opening portion on the frame 900 side of the air duct 906. The grease filter collects fine particles in the air entering the internal space of the frame 900 from the injection unit 300. This keeps the internal space of the frame 900 clean.

Air warmed in the internal space of the injection unit 300 is discharged to the outside through the exhaust port 920 provided in the injection unit cover 910. In the internal space of the injection unit 300, a fan is provided around the exhaust port 920. The air in the internal space of the injection unit 300 is discharged to the outside through the exhaust port 920 according to the airflow generated by blowing of the fan.

The internal space of the frame 900 and the internal space of the injection unit 300 are cooled by a cooling configuration having the cooler 950, the air duct 906, or the like.

Meanwhile, electric wires are accommodated inside the wire ducts 907 and 908. A signal or data from the control unit 700 disposed in the frame 900 is input to or output from the injection unit 300 through the electric wires accommodated in the wire ducts 907 and 908. The injection motor 350 or the like in the injection unit 300 is driven or the like by the signal or data from the control unit 700.

Since the injection unit 300 is movable forward or rearward in the X direction, it is desirable that the air duct 906 and the wire ducts 907 and 908 are bendable flexible ducts so as not to hinder the forward movement and rearward movement of the injection unit 300. For example, the bendable flexible duct is a duct having a bellows structure or a duct formed of rubber or the like.

The wire ducts 907 and 908 are bent by the forward movement and rearward movement of the injection unit 300, and thus, the electric wires accommodated inside the wire ducts 907 and 908 may be rubbed and dust or the like may be generated. Air flows through the wire ducts 907 and 908, and thus, the generated dust or the like may be scattered into the internal space of the injection unit 300 or the frame 900. Therefore, the opening portions of the wire ducts 907 and 908 are plugged with a rubber stopper or the like such that air does not enter the wire ducts 907 and 908. Alternatively, a duct filter is provided in the opening portions of the wire ducts 907 and 908 to collect dust or the like.

Accordingly, in the present embodiment, the air in the internal space of the frame 900 and the air in the internal space of the injection unit 300 communicate with each other through mainly the air duct 906 and hardly pass through the wire ducts 907 and 908.

However, the wire ducts 907 and 908 may also have a function as an air duct, and the air in the internal space of the frame 900 may be supplied to the injection unit 300 through the wire ducts 907 and 908. In this case, it is necessary to make the diameters of the wire ducts 907 and 908 larger than the electric wires accommodated inside the wire ducts 907 and 908 so as to secure a space through which the air passes inside the wire ducts 907 and 908. In addition, in a case where air is supplied by the airflow generated by the fan, it is necessary to dispose the fan such that the electric wires do not hinder the airflow.

### (Internal Structure of Injection Unit)

Next, an internal structure of the injection unit 300 which is an example of a cooling target will be described.

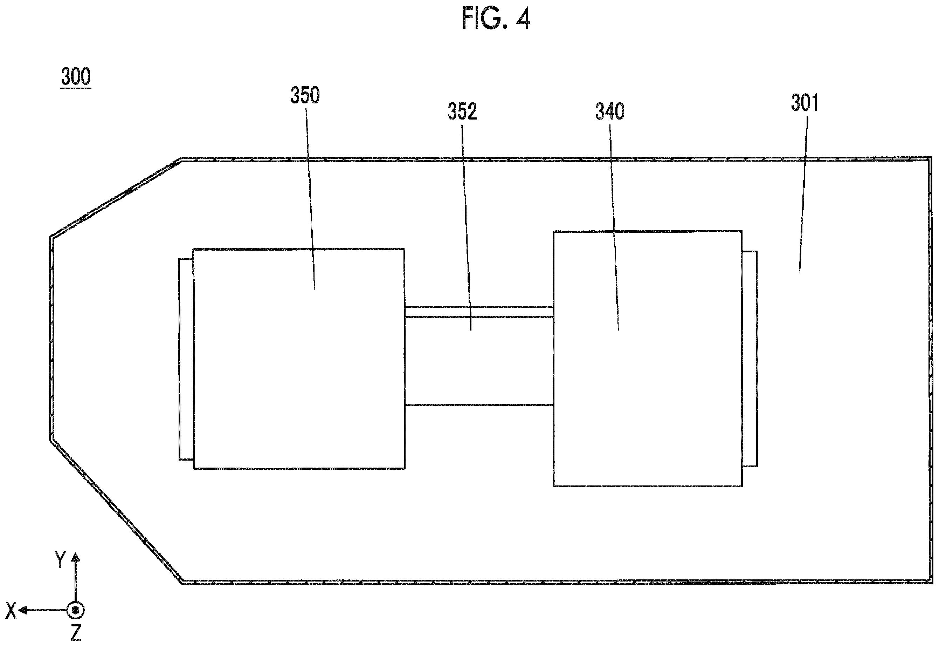

Fig. 4 is a top view of the injection unit 300 when the injection unit cover 910 is removed. The injection motor 350, a ball screw 352, and the plasticizing motor 340 are disposed on the slide base 301.

The injection motor 350 moves the screw 330 (not shown in Fig. 4) forward or rearward. The rotary motion of the injection motor 350 is converted into the linear motion by the ball screw 352, is transmitted to the screw 330 connected to the ball screw 352, and thus, the screw 330 moves forward or rearward.

The plasticizing motor 340 rotates the screw 330. The plasticizing motor 340 is driven to rotate the screw 330 at a set rotating speed and the molding material is fed forward along the spiral grooves of the screw 330.

Heat is generated in the injection motor 350 when the injection motor 350 is driven. The causes of the heat generation include an electric resistance of a coil due to energizing current, an electric resistance due to a spiral current around a magnetic flux line, friction of a bearing portion, a stirring resistance of air in an air gap portion between a rotor and a stator, or the like.

In addition, the ball screw 352 also generates heat depending on a friction torque, a rotation speed, or the like.

For example, a temperature of the internal space of the injection unit 300 is increased to approximately 70°C by the heat generated in the injection motor 350 or the ball screw 352.

The amount of the heat generation of the injection motor 350 or the ball screw 352 is increased by the rotation speed. If the high cycle of the injection molding machine progresses, the rotation speed of the injection motor 350 or the ball screw 352 increases, and thus, the amount of the heat generation further increase. The heat generation may cause troubles such as shortening a life of the injection motor 350 and lowering positioning accuracy due to thermal deformation of the ball screw 352.

In the present embodiment, the air cooled by the cooler 950 in the internal space of the frame 900 is supplied, and thus, the internal space of the injection unit 300 is cooled, and the heat generation of the injection motor 350 or the ball screw 352 is suppressed. For example, the temperature of the internal space of the injection unit 300 is suppressed to be an approximately temperature of the external air by the cooler 950.

In addition, the plasticizing motor 340 may be cooled or may not be cooled. In a case where the plasticizing motor 340 is not cooled, the internal space of the injection unit 300 is partitioned by placing a partition member. A space including the injection motor 350 and the ball screw 352 and a space including the plasticizing motor 340 are partitioned with each other. The cooled air is supplied to only the space including the injection motor 350 and the ball screw 352 and is not supplied to the space including the plasticizing motor 340.

The screw 330 feeds the molding material forward while melting the molding material by the heat from the cylinder 310. Accordingly, if the screw 330 is cooled, efficiency of the injection molding decreases. Therefore, in the present embodiment, the cooled air is supplied to the internal space of the injection unit 300, and thus, the screw 330 is prevented to be cooled.

In addition, the injection unit 300 is an example of a "drive unit" described in claims.

### (Internal Structure of Frame)

Next, an internal structure of the frame 900 which is an example of a cooling target will be described.

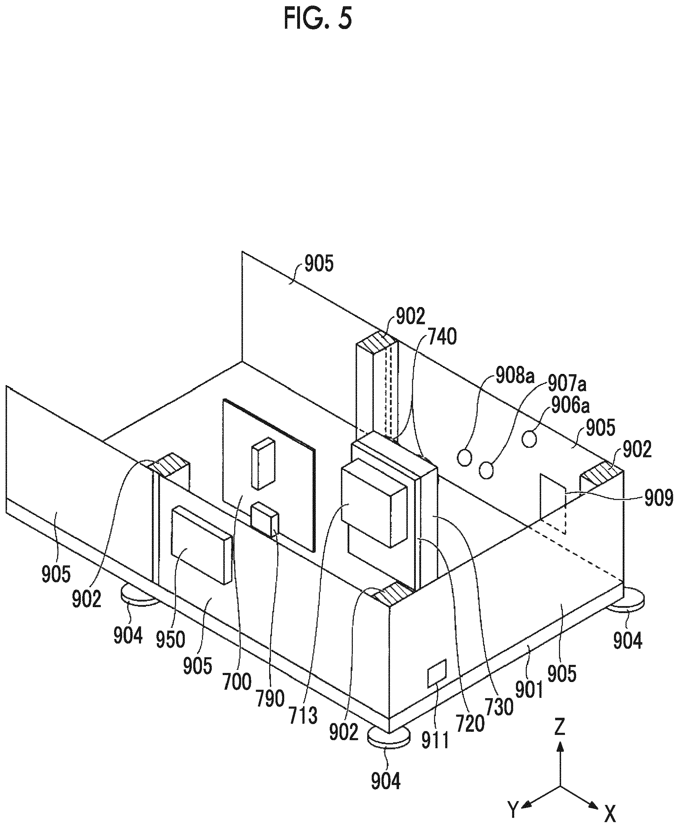

As shown in Fig. 5, an AC power supply line insertion port 911 is formed in one cover panel 905 (for example, the cover panel 905 on the X direction positive side) . An AC power supply line is inserted into the AC power supply line insertion port 911. The AC power supply line insertion port 911 is formed to be slightly larger than the thickness of the AC power supply line 710 in order to prevent fine particles such as dust from entering the inside of the frame 900 from the outside of the frame 900.

The internal space of the frame 900 is separated from the outside of the frame 900 by the frame base portion 901, the plurality of frame pillar portions 902, the frame ceiling portion 903, the plurality of cover panels 905, or the like. Therefore, it is possible to prevent the fine particles such as dust from entering the inside of the frame 900 from the outside of the frame 900.

The CPU 701 or the like of the control unit 700 or the inverter 713 disposed in the internal space of the frame 900 is a heat source which generates heat by driving thereof. For example, the temperature of the internal space of the frame 900 increases to approximately 55°C by the heat source of CPU 701 or the inverter 713.

In order to suppress the increase in the temperature, a cooling mechanism which cools the inverter 713 is provided in the internal space of the frame 900. For example, the cooling mechanism includes a heat sink 720, a heat sink cover 730 which forms a ventilation path which covers the heat sink 720 so as to form a ventilation path inside the heat sink 720, an outlet-side fan 740 which feeds air from an opening portion of the heat sink cover 730 to the ventilation path, or the like. The cooling mechanism is provided for each inverter 713, and one cooling mechanism cools one inverter 713. In addition, one cooling mechanism may cool a plurality of inverters 713.

The inverter 713 may be disposed on the operation unit 750 (refer to Fig. 1 or the like) side (so-called operation side, Y direction positive side in Fig. 5) based on the heat sink 720. A space for a user to operate the operation unit 750 is provided on the operation side of the frame 900, and thus, the inverter 713 is easily repaired or replaced.

The heat sink 720 includes a plate-shaped inverter attachment portion to which the inverter 713 is attached and a plurality of radiation pins. The inverter attachment portion absorbs heat generated when the inverter 713 is operated and transmits the heat to the plurality of radiation pins. The plurality radiation pins discharge the heat transmitted form the inverter attachment portion to air through a ventilation path formed between the plurality of radiation pins.

The injection molding machine 10 may include an internal pressure detector 790 which detects a pressure of the internal space of the frame 900. As the internal pressure detector 790, a general barometer is used. The internal pressure detector 790 transmits a signal indicating a detection result to the control unit 700.

Moreover, in order to suppress the increase in the temperature, the cooler 950 is attached to the X direction positive-side cover panel 905 on the Y direction positive side of Fig. 5. A rectangular through-hole is formed in the cover panel 905. The cooler 950 is attached to the cover panel 905 by a bolt or the like such that the Y direction positive-side surface of the cooler 950 comes into contact with the external air and the Y direction negative-side surface of the cooler 950 comes into contact with the air of the internal space of the frame 900 via the rectangular through-hole.

The air duct hole 906a, the wire duct holes 907a and 908a, and the intake port 909 are provided on the X direction positive-side cover panel 905 on the Y direction negative side of Fig. 5. The fan for generating the airflow is provided around the air duct hole 906a. In addition, the grease filter is attached to the opening portion of the air duct 906. Moreover, the air filter and the fan for drawing the external air are provided around the intake port 909. In order to simplifying the drawing, there are omitted in Fig. 5 and will be described with reference to Figs. 6 and 7.

Fig. 6 is a sectional view of the air duct hole 906a when viewed from the X direction positive side. One opening portion of the air duct 906 is connected to the air duct hole 906a. A fan 906c is attached to the internal space side of the cover panel 905 via a spacer 906d.

The fan 906c blows air in directions of hollow arrows in Fig. 6, and thus, generates an airflow. The direction of each of the hollow arrows in Fig. 6 is an example of a "predetermined direction" in claims. The air in the internal space of the frame 900 is supplied to the inside of the injection unit 300 through the air duct 906 by the airflow generated by the fan 906c. In this case, a "supply unit" of the air cooled in the internal space of the frame 900 is a path which has a position of the fan 906c generating the airflow as a start point and has a position of the air duct hole of the injection unit 300 through the air duct 906 as an end point.

In the present embodiment, the configuration in which the fan 906c is provided in the internal space of the frame 900 is shown. However, a fan may be provided in the internal space of the injection unit 300. In the internal space of the injection unit 300, an airflow may be generated by a fan and may be drawn from the injection unit 300 side such that the air of the internal space of the frame 900 is supplied to the internal space of the injection unit 300. In addition, fans may be provided in both the internal space of the frame 900 and the internal space of the injection unit 300 so as to generate the airflow, and the air in the internal space of the frame 900 may be supplied to the internal space of the injection unit 300.

In addition, as shown in the drawings, a grease filter 906b is attached inside the air duct 906. The grease filter 906b collects fine particles of the lubricant in the injection unit 300 trying to enter the internal space of the frame 900 through the air duct 906. As a result, the internal space of the frame 900 can be kept clean and the failure or the like of the control unit 700 installed in the frame 900 can be prevented. In addition, the grease filter 906b is an example of a "filter" in claims.

Fig. 7 is a sectional view of the intake port 909 when viewed from the X direction positive side. A fan 909b is attached in the internal space side of the cover panel 905 via a spacer 909c.

The fan 909b blows air in directions of hollow arrows in Fig. 7 to generate an airflow, and draws external air to the internal space of the frame 900.

In addition, an air filter 909a is attached in the internal space side of the intake port 909. The air filter 909a collects fine particles of air trying to enter the internal space of the frame 900 through the intake port 909. As a result, the internal space of the frame 900 can be kept clean and the failure or the like of the control unit 700 installed in the frame 900 can be prevented. In addition, the air filter 909a is an example of a "filter" in claims.

According to the above-described configuration, for example, the temperature of the internal space of the frame 900 is suppressed to be approximately the temperature of the external air.

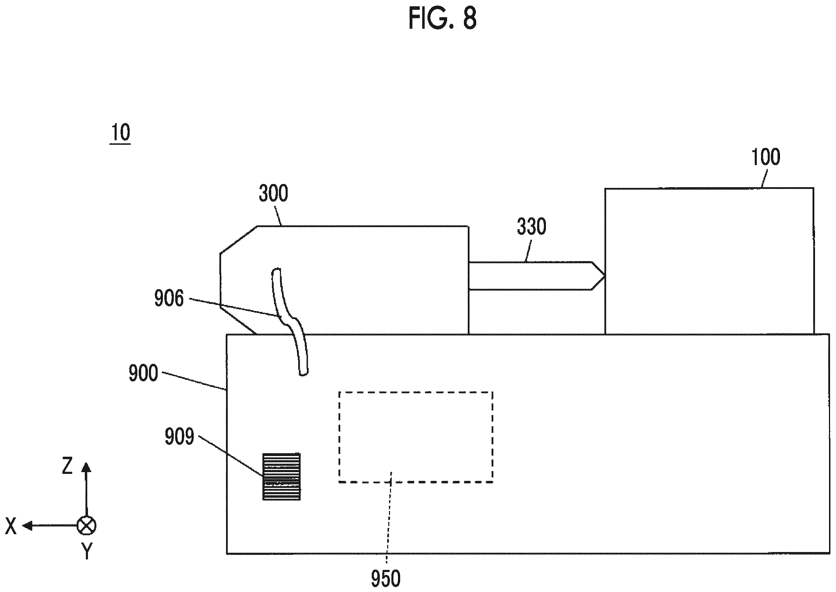

Next, Fig. 8 is a sectional view of the injection molding machine 10 when viewed from the side (Y direction negative side) opposite to the operation side of the frame 900.

The external air enters the internal space of the frame 900 from the intake port 909. The cooler 950 is attached to the operation side of the frame 900. The internal space of the frame 900 is cooled by the cooler 950.

In addition, the air cooled in the internal space of the frame 900 is supplied to the internal space of the injection unit 300 through the air duct 906 by the airflow generated by the fan in the internal space of the frame 900. The internal space of the injection unit 300 is cooled by the supplied air. A high-temperature air in the internal space of the injection unit 300 is discharged from the exhaust port (refer to Fig. 3) provided on an upper surface of the injection unit cover.

The air duct hole of the frame 900 is formed at approximately the same height (a position in the Z direction) as that the cooler 950 such that the air cooled by the cooler 950 can be more efficiently supplied to the injection unit 300. In addition, the air duct hole of the injection unit 300 is set at approximately the same height (a position in the Z direction) as that of the injection motor 350 or the ball screw 352 such that the cooled air from the frame 900 come into effective contact with the injection motor 350 or the ball screw 352 which is a cooling targets.

In this way, it is possible to cool the internal space of the frame 900 and the internal space of the injection unit 300.

In addition, as shown in the drawings, the internal space of the frame 900 is larger than the internal space of the injection unit 300. Since the internal space of the frame 900 does not include a movable portion such as the injection motor 350 in the injection unit 300, vibrations and the like are relatively suppressed in the internal space of the frame 900. For example, from this viewpoint, it is preferable that the cooler 950 is attached to the frame 900.

Moreover, the configuration having one air duct 906 is described. However, the present invention is not limited to this, and a plurality of air ducts 906 may be configured to supply the cooled air from the frame 900 to the injection unit 300.

As described above, according to the present embodiment, the air in the internal space of a unit such as the frame 900 is cooled by the cooler 950. Even in a case where heat generation of a heat source included in the unit is large, it is possible to increase cooling capacity by adjusting the output of the cooler 950 according to an increase in a temperature inside the unit. Accordingly, it is possible to suppress the increase in the temperature inside the unit.

According to the present embodiment, the air duct 906 is provided as a supply unit which supplies the air of the internal space of one unit such as the frame 900 cooled by the cooler 950 to the internal space of another unit such as the injection unit 300. Accordingly, even when the cooler 950 is not provided for each of the plurality of units provided in the injection molding machine 10, it is possible to cool the internal spaces of the plurality of units.

Since a cooling unit such as the cooler 950 is not provided for each unit, it is possible to save an installation space of the cooling device . Therefore, even in a case where a temperature inside the device further increases according to the high cycle of the injection molding machine 10, the increase in temperature inside the device can be suppressed without being restricted by the installation space of the cooling unit. Also in this case, it is possible to adjust the output of the cooler 950 so as to increase the cooling capacity according to the increase in the temperature inside the device or the number of devices which are cooling targets.

According to the present embodiment, the fan 906c is provided in the supply unit of the air cooled by the frame 900. It is possible to supply the air cooled in the internal space of one unit such as the frame 900 to another unit such as the injection unit 300 by the airflow generated by the fan 906c.

According to the present embodiment, the grease filter 906b is provided inside the air duct 906, and thus, it is possible to prevent the fine particles of the lubricant in the injection unit 300 from entering the internal space of the frame 900. As a result, the internal space of the frame 900 can be kept clean and the failure or the like of the control unit 700 disposed in the internal space of the frame 900 can be prevented.

According to the present embodiment, the air filter 909a is provided in the intake port 909 of the frame 900, and thus, it is possible to prevent the fine particles such as dust of the external air from entering the internal space of the frame 900. As a result, the internal space of the frame 900 can be kept clean and the failure or the like of the control unit 700 disposed in the frame 900 of the internal space can be prevented.

### [Second Embodiment]

The second embodiment shows an example in which the unit to which the cooler is attached is changed from the frame (control unit) to the injection unit.

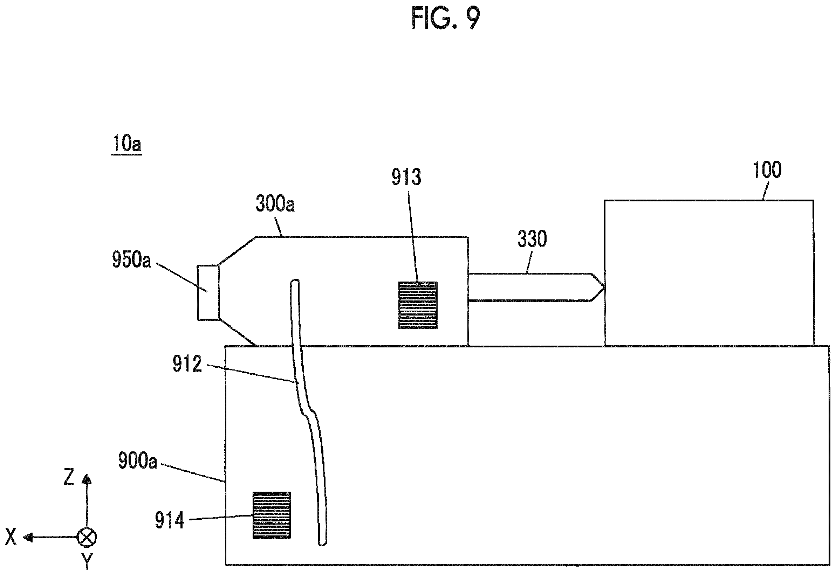

The injection molding machine 10a according to the present embodiment will be described with reference to Fig. 9. In addition, descriptions of the same portions as those of the above-described first embodiment may be omitted.

Fig. 9 is a sectional view of an injection molding machine 10a when viewed from the side (Y direction negative side) opposite to the operation side of the frame 900.

The injection molding machine 10a includes an injection unit 300a and a frame 900a.

A cooler 950a is attached to a side surface on the X direction positive side of the injection unit 300a. The cooler 950a has a function similar to that of the cooler 950 described in the first embodiment. In addition, an intake port 913 is provided on the injection unit cover of the injection unit 300a.

One opening portion of an air duct 912 is connected to the air duct hole of the injection unit 300a. In addition, the other opening portion of the air duct 912 is connected to the air duct hole of the frame 900a. The internal spaces of the injection unit 300a and the frame 900a communicate with each other through the air duct 912. An exhaust port 914 is provided on the frame cover portion.

Air is drawn from the outside to the internal space of the injection unit 300a through the intake port 913. The air in the internal space of the injection unit 300a is cooled by the cooler 950a. In the internal space of the injection unit 300a, air cooled by the cooler 950a is supplied to the inside of the frame 900a through the air duct 912. A high-temperature air in the internal space of the frame 900a is discharged from the exhaust port 914 to the outside.

In the internal space of the injection unit 300a, a fan for generating an airflow is provided around the air duct hole. The air in the internal space of the injection unit 300a is supplied to the frame 900a by the airflow generated by the fan. Although not shown in Fig. 9, it is possible to use a fan having a configuration similar to the configuration of the fan shown in Fig. 6.

An air filter is provided around the intake port 913 of the injection unit 300a. The air filter collects fine particles included in the drawn external air. Accordingly, it is possible to prevent the fine particles from entering the internal space of the injection unit 300a. Although not shown in Fig. 9, it is possible to use an air filter having a configuration similar to the configuration of the air filter shown in Fig. 7.

A grease filter 912b is provided in the opening portion of the air duct 912 which is connected to an air duct hole 912a of the frame 900a.

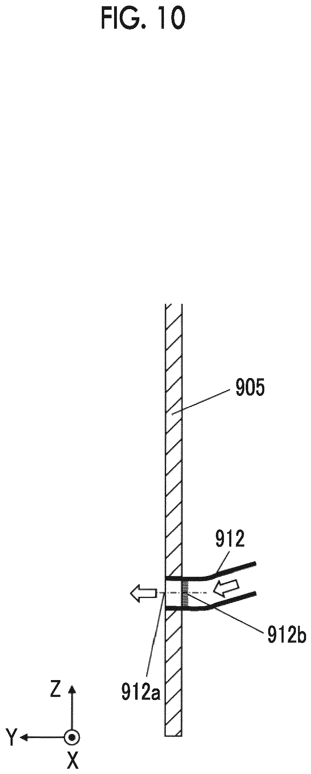

Fig. 10 is a sectional view of the air duct hole 912a when viewed from the X direction positive side. One opening portion of the air duct 912 is connected to the air duct hole 912a. The grease filter 912b is attached to the inside of the air duct 912.

In Fig. 10, the air in the internal space of the injection unit 300a is supplied to the internal space of the frame 900a through the air duct 912 according to the airflow in directions indicated by hollow arrows. The grease filter collects fine particles of a lubricant contained in the air of the internal space of the injection unit 300a and prevents the fine particles of the lubricant from entering the frame 900a. As a result, the internal space of the frame 900a can be kept clean and the failure or the like of the control unit 700 disposed in the internal space of the frame 900a can be prevented.

In the present embodiment, the configuration in which the fan for generating the airflow is provided in the internal space of the injection unit 300a is shown. However, the fan may be provided in the internal space of the frame 900a. In addition, the fans may be provided in both the internal space of the frame 900 and the internal space of the injection unit 300 so as to generate the airflow, and the air in the internal space of the injection unit 300a may be supplied to the internal space of the frame 900a.

Effects other than the above-described effects are similar to those described in the first embodiment.

### [Third Embodiment]

In a third embodiment, an example is described, in which a vent with respect to the outside such as the intake port or the exhaust port is not provided, air internally circulates between an internal space of a frame (control unit) and an internal space of an injection unit, and the circulating air is cooled by the cooler 950.

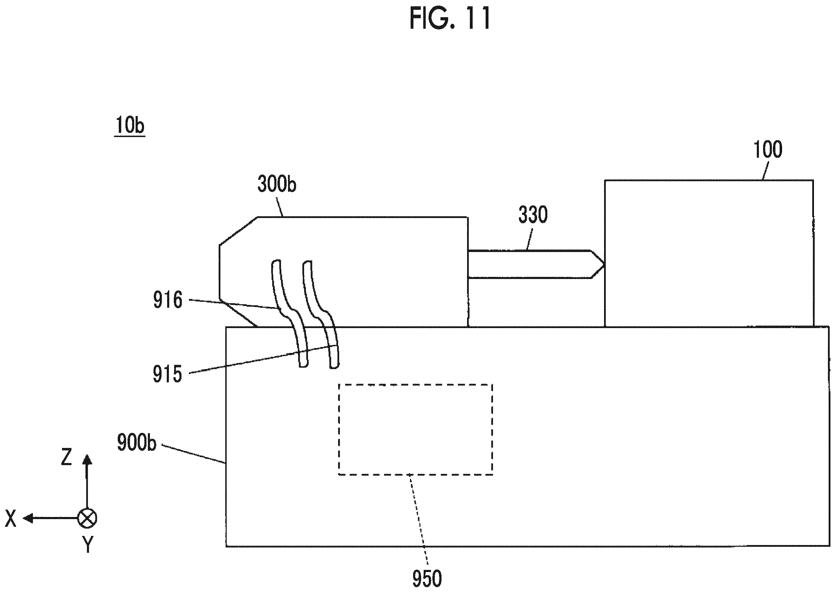

An injection molding machine 10b according to the third embodiment will be described with reference to Fig. 11. In addition, descriptions of the same portions as those of the above-described first and second embodiments may be omitted.

Fig. 11 is a side view of the injection molding machine 10b according to the third embodiment when viewed from the side (Y direction negative side) opposite to the operation side of the frame 900.

The injection molding machine 10b includes an injection unit 300b and a frame 900b. The cooler 950 is attached to the frame cover portion of the frame 900b.

The injection unit 300b and the frame 900b communicate with each other through an air duct 915. In addition, the injection unit 300b and the frame 900b communicate with each other through an air duct 916.

In the internal space of the frame 900b, a fan is provided around a hole for the air duct 915. Air cooled by the cooler 950 in the internal space of the frame 900b is supplied to the internal space of the injection unit 300b through the air duct 915 by an airflow generated by the fan.

In addition, in the internal space of the injection unit 300b, a fan is provided around a hole for the air duct 916. In the internal space of the injection unit 300b, air whose temperature is increased by heat generated by a heat source is fed to the internal space of the frame 900b through the air duct 916 by the airflow generated by the fan. In addition, in the internal space of the frame 900b, the air is cooled by the cooler 950.

A grease filter is provided in an opening portion of the air duct 916 which is connected to the hole for the air duct 916 of the frame 900b. The grease filter collects fine particles of a lubricant contained in the air in the internal space of the injection unit 300b and prevents the fine particles of the lubricant from entering the frame 900b. As a result, the internal space of the frame 900b can be kept clean and the failure or the like of the control unit 700 disposed in the internal space of the frame 900b can be prevented.

Effects other than the above-described effects are similar to those described in the first and second embodiments.

### [Fourth Embodiment]

In a fourth embodiment, an example is described, in which a cooler is attached to one unit of the plurality of drive units and cooled air is supplied to other drive units through a supply unit.

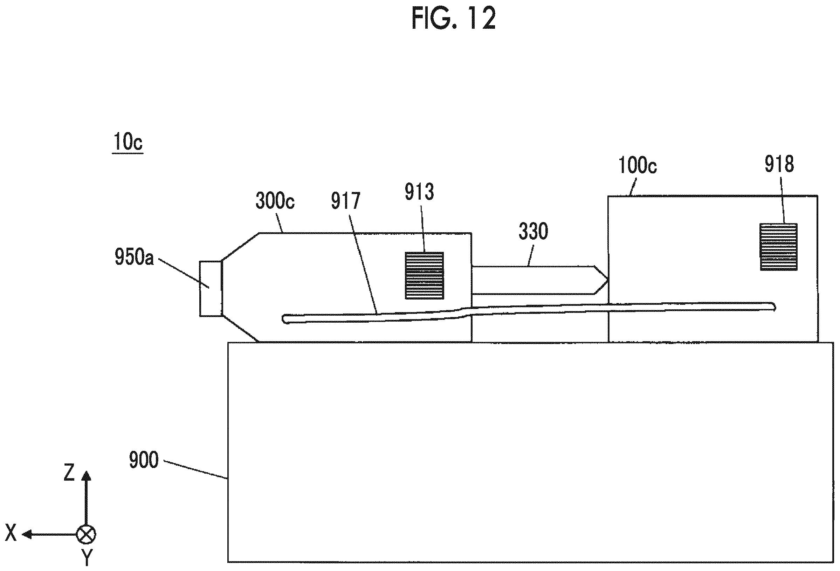

An injection molding machine 10c according to the fourth embodiment will be described with reference to Fig. 12. In addition, descriptions of the same portions as those of the above-described first to third embodiments may be omitted.

Fig. 12 is a side view of the injection molding machine 10c according to the fourth embodiment when viewed from the side (Y direction negative side) opposite to the operation side of the frame 900.

The cooler 950a is attached to an injection unit 300c. In addition, the intake port 913 is provided in an injection unit cover of the injection unit 300c.

One opening portion of an air duct 917 is connected to an air duct hole of the injection unit 300c. The other opening portion of the air duct 917 is connected to an air duct hole of a mold clamping unit 100c. Internal spaces of the injection unit 300c and the mold clamping unit 100c communicate with each other through the air duct 912. An exhaust port 918 is provided on a mold clamping unit cover.

Air is drawn from the outside to the internal space of the injection unit 300c through the intake port 913. The cooler 950a cools air in the internal space of the injection unit 300c. In the internal space of the injection unit 300c, air cooled by the cooler 950a is supplied to the internal space of the mold clamping unit 100c through the air duct 917. A high-temperature air in the internal space of the mold clamping unit 100c is discharged to the outside from the exhaust port 918.

In the internal space of the injection unit 300c, a fan for generating an airflow is provided around the air duct hole. Air cooled by the cooler 950a in the internal space of the injection unit 300c is fed to the internal space of the mold clamping unit 100c through the air duct 917 by an airflow generated by the fan.

A grease filter is provided in an opening portion of the air duct 917 which is connected to the hole for the air duct 917 of the mold clamping unit 100c. The grease filter collects fine particles of a lubricant contained in the air in the internal space of the injection unit 300c and prevents the fine particles of the lubricant from entering the mold clamping unit 100c. As a result, the internal space of the mold clamping unit 100c can be kept clean.

The fan for generating the airflow is not limited to the injection unit 300c and may be provided in the internal space of the mold clamping unit 100c. In addition, the fans may be provided in both the internal space of the injection unit 300c and the internal space of the mold clamping unit 100c so as to generate the airflow, and the air in the internal space of the injection unit 300c may be supplied to the internal space of the mold clamping unit 100c.

The drive unit is not limited to two drive units of the injection unit 300c and the mold clamping unit 100c. The present embodiment may be applied to three or drive units. For example, the drive unit is a peripheral units of the injection molding machine or the like. That is, a cooler may be attached to one unit of three or more drive units such that air cooled by the drive unit to which the cooler is attached is supplied to two or more other drive units . In addition, a cooler may be attached to the frame (control unit) such that air cooled in the internal space of the frame (control unit) is supplied to two or more other drive units.

Effects other than the above-described effects are similar to those described in the first to third embodiments.

Hereinbefore, the embodiments or the like of the injection molding machine or the like are described. However, the present invention is not limited to the above-described embodiments or the like, and various modifications and improvements are possible within the scope of the present invention described in the claims.

### Brief Description of the Reference Symbols

- 10:: injection molding machine
- 100:: mold clamping unit
- 300:: injection unit
- 340:: plasticizing motor
- 350:: injection motor
- 352:: ball screw
- 700:: control unit
- 900:: frame
- 906:: air duct
- 907, 908:: wire duct
- 909:: intake port
- 910:: injection unit cover
- 920:: exhaust port
- 950:: cooler

## Claims

1. An injection molding machine comprising:
a drive unit (300, 300a, 300b, 300c); and
a control unit (700),
wherein each of the drive unit (300, 300a, 300b, 300c) and the control unit (700) includes a heat source in an internal space which is covered with a cover of each of the drive unit (300, 300a, 300b, 300c) and the control unit (700),
**characterized in that**,
the internal space of any one unit of the drive unit (300, 300a, 300b, 300c) and the control unit (700) is cooled by a cooler (950),
wherein the cooler (950) is adapted for cooling air in an internal space of a frame (900), and in the cooler heated air inside the frame (900) is forcibly circulated by an internal fan motor.

2. The injection molding machine according to claim 1,
wherein the cooler (950) is attached such that a portion of the cooler (950) comes into contact with air in an internal space of a frame (900) and a portion of the cooler (950) comes into contact with air outside the frame (900).

3. The injection molding machine according to claim 1 or 2,
wherein the internal space of the frame (900) is separated from the outside of the frame (900) by a frame base portion (901), a plurality of frame pillar portions (902), a frame ceiling portion (903) or a plurality of cover panels ( (905), and
wherein various electrical components and the like are disposed in an internal space of the frame (900).

4. The injection molding machine according to any one of claims 1 to 3,
wherein the cooler (950) includes a heat exchanger and heat exchange is performed between the internal air and the external air by a heat exchanger included in the cooler (950) so that the internal air is cooled to approximately the same temperature as that of the external air.

5. The injection molding machine according to any one of claims 1 to 4,
wherein a plurality of the drive units (300, 300a, 300b, 300c) are provided.

6. The injection molding machine according to any one of claims 1 to 5, further comprising:
a supply unit (906, 912, 915) which is adapted to supplying air in the internal space of the one unit cooled by the cooler (950) to the internal space of the other unit.

7. The injection molding machine according to claim 6,
wherein the supply unit (906, 912, 915) includes a fan (906c) for generating an airflow in a predetermined direction.

8. The injection molding machine according to any one of claims 1 to 7,
wherein the control unit (700) includes the cooler (950), and
wherein air cooled by the cooler (950) is supplied to the drive unit (300, 300a, 300b, 300c).

9. The injection molding machine according to any one of claims 1 to 8,
wherein a filter (909a, 906b, 912b) is provided in the supply unit (906, 912, 915) to the internal space of the control unit (700) or a take-in port of air.

10. The injection molding machine according to claim 9,
wherein the filter (906b, 912b) is provided in the supply unit (906, 912, 915) from the drive unit (300, 300a, 300b, 300c) to the control unit (700).

11. The injection molding machine according to claim 9,
wherein the filter (909a) is provided in the take-in port (909, 913) through which external air is taken into the internal space of the control unit (700).

## Patentansprüche

1. Spritzgießmaschine, umfassend:
eine Antriebseinheit (300, 300a, 300b, 300c) und
eine Steuereinheit (700),
wobei sowohl die Antriebseinheit (300, 300a, 300b, 300c) als auch die Steuereinheit (700) eine Wärmequelle in einem Innenraum umfassen, der mit einer Abdeckung sowohl der Antriebseinheit (300, 300a, 300b, 300c) als auch der Steuereinheit (700) abgedeckt ist,
**dadurch gekennzeichnet, dass**
der Innenraum einer beliebigen Einheit von der Antriebseinheit (300, 300a, 300b, 300c) und der Steuereinheit (700) durch einen Kühler (950) gekühlt wird,
wobei der Kühler (950) zum Kühlen von Luft in einem Innenraum eines Rahmens (900) angepasst ist und erwärmte Luft innerhalb des Rahmens (900) zwangsweise durch einen internen Gebläsemotor in dem Kühler umgewälzt wird.

2. Spritzgießmaschine nach Anspruch 1,
wobei der Kühler (950) derart befestigt ist, dass ein Abschnitt des Kühlers (950) in Kontakt mit Luft in einem Innenraum eines Rahmens (900) kommt und ein Abschnitt des Kühlers (950) in Kontakt mit Luft außerhalb des Rahmens (900) kommt.

3. Spritzgießmaschine nach Anspruch 1 oder 2,
wobei der Innenraum des Rahmens (900) durch einen Rahmen-Basisabschnitt (901), mehrere Rahmen-Pfeilerabschnitte (902), einen Rahmen-Deckenabschnitt (903) oder mehrere Abdeckplatten (905) von der Außenseite des Rahmens (900) getrennt ist und
wobei verschiedene elektrische Bauteile und dergleichen in einem Innenraum des Rahmens (900) angeordnet sind.

4. Spritzgießmaschine nach einem der Ansprüche 1 bis 3,
wobei der Kühler (950) einen Wärmetauscher umfasst und ein Wärmeaustausch zwischen der Innenluft und der Außenluft durch einen Wärmetauscher, der in dem Kühler (950) eingeschlossen ist, so durchgeführt wird, dass die Innenluft auf annähernd die gleiche Temperatur wie diejenige der Außenluft gekühlt wird.

5. Spritzgießmaschine nach einem der Ansprüche 1 bis 4,
wobei mehrere Antriebseinheiten (300, 300a, 300b, 300c) vorgesehen sind.

6. Spritzgießmaschine nach einem der Ansprüche 1 bis 5, ferner umfassend:
eine Zuführungseinheit (906, 912, 915), die angepasst ist, Luft in dem Innenraum der einen Einheit, die durch den Kühler (950) gekühlt wird, zu dem Innenraum der anderen Einheit zuzuführen.

7. Spritzgießmaschine nach Anspruch 6,
wobei die Zuführungseinheit (906, 912, 915) ein Gebläse (906c) zum Erzeugen eines Luftstroms in einer vorbestimmten Richtung umfasst.

8. Spritzgießmaschine nach einem der Ansprüche 1 bis 7,
wobei die Steuereinheit (700) den Kühler (950) umfasst und
wobei durch den Kühler (950) gekühlte Luft der Antriebseinheit (300, 300a, 300b, 300c) zugeführt wird.

9. Spritzgießmaschine nach einem der Ansprüche 1 bis 8,
wobei ein Filter (909a, 906b, 912b) in der Zuführungseinheit (906, 912, 915) zu dem Innenraum der Steuereinheit (700) oder einer Lufteinlassöffnung vorgesehen ist.

10. Spritzgießmaschine nach Anspruch 9,
wobei der Filter (906b, 912b) in der Zuführungseinheit (906, 912, 915) von der Antriebseinheit (300, 300a, 300b, 300c) zu der Steuereinheit (700) vorgesehen ist.

11. Spritzgießmaschine nach Anspruch 9,
wobei der Filter (909a) in der Einlassöffnung (909, 913) vorgesehen ist, durch die Außenluft in den Innenraum der Steuereinheit (700) geleitet wird.

## Revendications

1. Une machine de moulage par injection comprenant :
une unité d'entrainement (300, 300a, 300b, 300c) ; et
une unité de commande (700),
dans laquelle chacune de l'unité d'entraînement (300, 300a, 300b, 300c) et de l'unité de commande (700) comprend une source de chaleur dans un espace interne qui est recouverte par un capot de chacune de l'unité d'entraînement (300, 300a, 300b, 300c) et de l'unité de commande (700),
**caractérisée en ce que**
l'espace interne d'une quelconque de l'unité d'entraînement (300, 300a, 300b, 300c) et de l'unité de commande (700) est refroidi par un refroidisseur (950),
dans laquelle le refroidisseur (950) est adapté pour refroidir l'air dans un espace interne d'un châssis (900), et, dans le refroidisseur, l'air chauffé à l'intérieur du châssis (900) est mis en circulation forcée par un moteur de ventilateur interne.

2. La machine de moulage par injection selon la revendication 1,
dans laquelle le refroidisseur (950) est fixé de sorte qu'une partie du refroidisseur (950) entre en contact avec l'air dans un espace interne d'un châssis (900) et qu'une partie du refroidisseur (950) entre en contact avec l'air à l'extérieur du châssis (900).

3. La machine de moulage par injection selon la revendication 1 ou 2,
dans laquelle l'espace interne du châssis (900) est séparé de l'extérieur du châssis (900) par une partie de base de châssis (901), une pluralité de parties de piliers de châssis (902), une partie de plafond de châssis (903) ou une pluralité de panneaux de recouvrement (905), et
dans laquelle différents composants électriques et similaires sont disposés dans un espace interne du châssis (900).

4. La machine de moulage par injection selon l'une quelconque des revendications 1 à 3,
dans laquelle le refroidisseur (950) comprend un échangeur thermique et l'échange thermique est effectué entre l'air interne et l'air externe par un échangeur thermique inclus dans le refroidisseur (950) de sorte que l'air interne soit refroidi approximativement à la même température que celle de l'air externe.

5. La machine de moulage par injection selon l'une quelconque des revendications 1 à 4,
dans laquelle une pluralité d'unités d'entraînement (300, 300a, 300b, 300c) est prévue.

6. La machine de moulage par injection selon l'une quelconque des revendications 1 à 5, comprenant en outre :
une unité d'alimentation (906, 912, 915) qui est adaptée pour fournir l'air dans l'espace interne de l'unité refroidie par le refroidisseur (950) à l'espace interne de l'autre unité.

7. La machine de moulage par injection selon la revendication 6,
dans laquelle l'unité d'alimentation (906, 912, 915) comprend un ventilateur (906c) destiné à générer un flux d'air dans une direction prédéterminée.

8. La machine de moulage par injection selon l'une quelconque des revendications 1 à 7,
dans laquelle l'unité de commande (700) comprend le refroidisseur (950), et
dans laquelle l'air fourni par le refroidisseur (950) est fourni à l'unité d'entraînement (300, 300a, 300b, 300c).

9. La machine de moulage par injection selon l'une quelconque des revendications 1 à 8,
dans laquelle un filtre (909a, 906b, 912b) est prévu dans l'unité d'alimentation (906, 912, 915) au niveau de l'espace interne de l'unité de commande (700) ou d'un orifice d'admission d'air.

10. La machine de moulage par injection selon la revendication 9,
dans laquelle le filtre (906b, 912b) est prévu dans l'unité d'alimentation (906, 912, 915) entre l'unité d'entraînement (300, 300a, 300b, 300c) et l'unité de commande (700).

11. La machine de moulage par injection selon la revendication 9,
dans laquelle le filtre (909a) est prévu dans l'orifice d'admission (909, 913) par lequel l'air externe est admis dans l'espace interne de l'unité de commande (700).
